# EUROPEAN PATENT SPECIFICATION

(11) **EP 4 147 853 B1**
(45) Date of publication and mention of the grant of the patent: **31.01.2024**
(21) Application number: 22195018.1
(22) Date of filing: 12.09.2022
(51) Int. Cl.: B29C 64/165, B22F 10/28, B22F 10/31, B22F 12/13, B22F 12/45, B22F 12/90, B29C 64/295, B29C 64/393, B33Y 10/00, B33Y 30/00, B33Y 50/02

(54) **METHOD FOR DETERMINING A SET POINT FOR A THERMAL SENSOR IN AN APPARATUS FOR THE MANUFACTURE OF 3D OBJECTS**
VERFAHREN ZUR BESTIMMUNG EINES SOLLWERTES FÜR EINEN THERMISCHEN SENSOR IN EINER VORRICHTUNG ZUR HERSTELLUNG VON 3D-OBJEKTEN
PROCÉDÉ DE DÉTERMINATION D'UN POINT DE CONSIGNE POUR UN CAPTEUR THERMIQUE DANS UN APPAREIL DE FABRICATION D'OBJETS 3D

(30) Priority: 13.09.2021 GB 202113000
(43) Date of publication of application: 15.03.2023
(73) Proprietor: Stratasys Powder Production Ltd, London SW1H 0BL (GB)
(72) Inventor: DORINI, Gianluca, London SW1H 0BL (GB)
(74) Representative: Pitchford, James Edward

(56) References cited:
- US-A1- 2017 297 265

## Description

### FIELD OF THE INVENTION

The present disclosure relates to a method for calibrating a thermal sensor with respect to a thermal phase transition, such as the melting point, of a particulate build material applied layer-by-layer and processed into slices of consolidated build material. The method might find particular benefit in a powder bed fusion apparatus in which three-dimensional (3D) objects are built layer-by-layer from particulate material. A controller and an apparatus for applying the method are also disclosed.

### BACKGROUND

In applications for forming 3D objects from particulate material, such as powder bed fusion applications like "print and sinter" and laser sintering, an object is formed layer-by-layer from particulate material spread in successive layers across a support. Each successive layer of the object is melted or partially melted to fuse or sinter the particulate material over defined regions and in so doing to consolidate it, in order to form a cross section of the 3D object. In the context of particulate polymer materials for example, the process of melting achieves fusion of particles. Such a process requires accurate temperature control over the temperature of the surface that is being processed to achieve high-quality, uniform objects with well-defined properties. Accurate temperature control requires use of a thermal sensor, such as a pyrometer or thermal camera, that detects the temperature of the surface (the build bed surface). Detection may be continuous or intermittent during each layer cycle and is used to apply feedback control to the various heat sources used during a build process, for example to the zonal overhead heater that may be arranged to maintain the build bed surface at a predefined uniform temperature below the melting point of the particulate material. For reliable process control from build to build, or between different apparatus, it is desirable to relate the sensor readings to a known and reproducible thermal event for a given material, for example to a phase change. This might be the phase change from solid to liquid (i.e. melting or fusion of the particulate material). Different materials may have different melting points; similarly, the same material, treated or aged differently, may display a shift in melting point. In "print and sinter" processes for example, often some of the powder is recycled and reused and the powder properties are liable to change as a result of thermal cycling, potentially causing a shift in the melting conditions and necessitating an adjustment in thermal control. It is therefore important to be able to determine a reliable set point for the temperature readings of the thermal sensor.

A further consideration is that temperatures measured by a thermal sensor can deviate from the true temperatures. One of the reasons is that a thermal sensor's readings are affected by its body temperature: a drift of sensor temperature causes sensor measurements to drift. Even though thermal sensors, such as thermal cameras, are generally equipped with a "Non Uniformity Correction" (NUC) action, namely they are able to estimate and correct the offset with respect to their body temperature, this is yet not sufficient to fulfil process transfer requirements that would allow different printers to be compared in their performance. Transfer requirements include having comparable thermal sensor outputs in different 3D printers to provide comparable thermal processing parameters for identical build process and materials. NUC actions are generally instantaneous corrections (time triggered, or sensor temperature triggered), which can cause sudden jumps in temperature readings that disrupt any feedback controls relying on the thermal sensor's output. In addition, there is no guarantee that NUC corrections provide conformity in temperature readings between multiple sensors. While temperature corrections will make the outputs similar, they are often sufficiently different to cause noticeable process diversity. This may be due to a variety of reasons, such as variability in infrared transparency of the protective window, typically separating a thermal camera from the hot working environment of a 3D printer. The protective window may, for example, get covered by oily fumes and suspended dust (reducing infrared transparency), or it may get discoloured due to heat exposure from the various heat sources within the 3D printer (enhancing infrared transparency).

US 2017/297265 A1, according to its abstract, discloses a method of controlling temperature in an apparatus for generating a three-dimensional object and comprising performing a calibration test on a sample of build material that is to be used in generating a three-dimensional object, calibrating at least one temperature point from the calibration test, and using the at least one calibrated temperature point during subsequent temperature control of the apparatus.

A calibration process may assess thermal camera measurements for a characteristic change in the temperature curve, caused by the latent heat of fusion that is displayed by all materials, while a region of particulate material is slowly heated to melt. However, it has been found, from analysing such a single temperature curve, that, even if the heating process is slowed down significantly, the characteristic rate of change of the time-temperature curve typically varies so gradually that it presents challenges in determining the onset of melting repeatably and accurately. For example, across a fleet of printers, where printers can be located in different environmental conditions, it has been found that control over the thermal processes, based on known calibration routines, results in inadequate accuracy when using known techniques, which in turn leads to variation in build quality. A more robust calibration process is needed that can be operated in situ of the printer, any time as necessary, to provide a set point for the temperature readings of a thermal sensor, based on a given build material, and that provides for a transferable build process among a fleet of printers.

### SUMMARY

The present invention is defined in Claim 1 of the appended claims, while particular embodiments of the invention are set out in the appended dependent claims.

The following disclosure describes, in one aspect, a method for determining a set point for a primary thermal sensor in an apparatus for the layer-by-layer manufacture of a three-dimensional object from particulate material; the method comprising:
(a) distributing a layer of particulate material, the layer providing a build bed surface;
(b) measuring a first temperature value TD within a test region with one of a primary thermal sensor and a secondary thermal sensor positioned above the build bed surface;
(c) depositing an amount of absorption modifier over at least one of the test region and a surrounding area surrounding the test region;
(d) heating the test region over a period of time;
(e) measuring with the primary thermal sensor a second temperature value TR within the test region;
(f) distributing a further layer of material over the preceding layer of material, the new layer providing the build bed surface;
   - repeating the steps (b) to (f) of the layer cycle, such that the test region of each further layer reaches a higher temperature value TR than that of the test region of the preceding layer, at least until the test region starts to melt;
   - determining a set point for the primary thermal sensor from a characteristic in the evolution of the measured first and second temperature values of TD and TR of the test region; and
   - applying the determined set point to subsequent measurements of the primary thermal sensor.

### BRIEF DESCRIPTION OF THE DRAWINGS

Reference is now directed to the drawings, in which:
Figure 1A is a schematic cross-section of detail of a side view of an apparatus configured to apply the method of the invention of determining the set point for a primary thermal sensor of the apparatus;
Figure 1B is a schematic plan view of the build bed surface of the apparatus of Figure 1A;
Figure 2 is a flow chart of the method of the invention;
Figure 3 is a variant of the flow chart of Figure 2;
Figure 4 provides further detail of a variant of block 100 of the flow chart of Figure 2;
Figure 5 is a schematic cross-section of a test object formed by a variant of the method; and
Figure 6 is a schematic plan view of a build bed surface comprising a plurality of test areas.
In the drawings, like elements are indicated by like reference numerals throughout.

### DETAILED DESCRIPTION

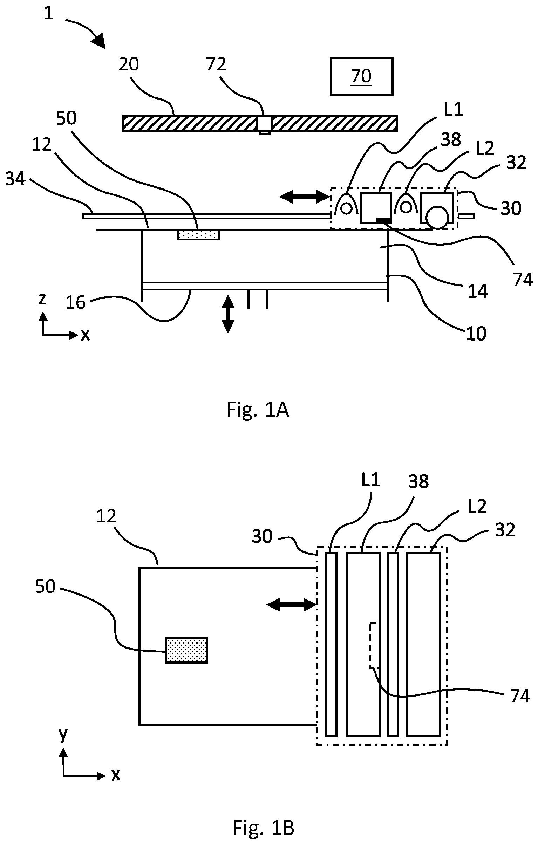

An improved method for the determination of a set point of a thermal sensor, such as a thermal camera, in a 3D printing apparatus, an associated apparatus and controller therefor, and a resulting test part, will now be described with reference to Figures 1A to 6.

Figure 1A schematically illustrates detail of a cross section of a powder bed fusion type apparatus 1 comprising a thermal sensor 72 configured to carry out the method and its variants that will now be described. In the following, the thermal sensor 72 to be calibrated for subsequent thermal control over a build process is referred to as "primary thermal sensor" of the apparatus 1.

In a typical process for the layer-by-layer formation of a 3D object from particulate material, successive layers of particulate material are distributed, each to form a build bed surface 12 which is processed to form successive cross-sections of the object. In this context, the reference to the 'build bed surface' is to the surface of the top-most layer of particulate material. In other words, each newly distributed layer forms a new build bed surface 12 that is the build bed surface of the layer to be processed in that particular cycle of the process. As indicated in Figure 1A, the apparatus 1 comprises a container system comprising container walls 10 and a platform 16 that contains the object within a bed of particulate material as it is being built. The build bed 14 is supported by the platform 16, which is arranged to move vertically, within the container walls 10, to lower or raise the build bed surface 12, for example by a piston located beneath the platform. The apparatus 1 further comprises, without specifically showing, a reservoir to supply particulate material to a dosing module that doses an amount of fresh particulate material to be distributed across the build bed 14, thus forming a new build bed surface 12.

Modules for distributing the particulate material and processing the formed layer are provided on one or more carriages moveable across the layer. Accordingly, for illustrative purposes, Figure 1A shows a carriage 30 arranged on one or more rails 34 that allow the carriage 30 to be moved back and forth above the build bed 14. The carriage 30 comprises a distribution module 32, for example comprising a roller, to distribute a new layer of particulate material over the build bed 14 to form a new build bed surface 12. A droplet deposition module 38, for selectively depositing radiation absorber over the build bed surface 12, is also supported on the carriage 30, for example a fluid deposition module such as a printhead for depositing radiation absorbing fluid over a defined region 50.

A heat source L1 is provided on the carriage 30 to heat the region 50 following deposition of the radiation absorbing fluid. The selectivity of preferentially heating the region 50 versus the surrounding area is achieved by providing the heat source L1 with a spectrum of radiation that, at least partially, overlaps with the absorption spectrum of the radiation absorbing fluid but that is not significantly absorbed by the particulate material alone. The radiation-absorbing fluid readily absorbs radiation from the heat source L1 and heats the particulate material it is in thermal contact with (i.e. over the region 50). If the combination of absorber amount and power input to heat source L1, causing a certain energy input to the region 50, is sufficient, the particulate material of region 50 will, for example, melt/sinter to fuse and form consolidated particulate material. Thus, during a build process of an object, the radiation-absorbing fluid may be deposited over selected portions of the build bed surface 12, to define the cross-sections of the object over successive layers.

Figure 1B shows a plan view of the build bed surface 12 of Figure 1A with the test region 50 and the carriage 30, with its distribution, deposition and heating modules spanning the width of the build bed surface 12 (along y). As indicated before, the carriage 30 is moveable back and forth along the x-axis, which herein is also referred to as the length of the build bed surface 12, the length being perpendicular to the width, however reference to length and width is not intended to indicate relative extent of the two directions but to merely help reference directions of the process. In some apparatus, and as exemplified in the apparatus 1 of Figures 1A and 1B, a second heat source L2 may be arranged to immediately preheat the layer following distribution by the distribution module 32. Providing a second moveable preheat source L2 may be an effective way of returning the temperature of the new and much colder layer (compared to the previous, processed layer) back towards the target build bed temperature. This may be done in combination with, or in addition to, operating the stationary overhead heater 20 provided above the build bed surface 12. The preheat temperature may be a predetermined temperature lower than the melting temperature and higher than the solidification temperature of the particulate material.

To adequately control the build bed surface temperature, the build bed surface 12 is generally monitored by a primary thermal sensor 72 provided above it. These measurements by the primary thermal sensor 72 are used to apply feedback control to one or more heating devices to achieve thermal uniformity on the build bed surface 12. If adequately controlled, large temperature differentials between fused and unfused areas may be prevented so that warping or curl of the object can be avoided, allowing for reliable object quality, in terms of mechanical and visual properties, of the finished object. An effective way of achieving temperature uniformity over the build bed surface 12 is to provide a zonal overhead heater 20 having individually controllable heating elements placed above different portions of the build bed surface 12. A feedback loop may be used to control each heater element of the heater array which may be comprised in the overhead heater 20 based on the temperature measurements of the build bed surface 12 by primary thermal sensor 72. Feedback control may be provided by a controller 70, shown in Figure 1A. The primary thermal sensor 72 may be a thermal camera with a high resolution pixel array able to monitor the entire build bed surface 12, for example by different groups of pixels monitoring corresponding different portions of the build bed surface 12. In turn, measurements from a group of pixels may be used to control a respective one or more heater elements of the overhead heater 20 to affect the temperature of a corresponding zone of the build bed surface 12, thus achieving zonal control.

The inventor has discovered a method for a calibration process for determining a set point for the scale of the temperature measurements of the primary sensor 72 in an apparatus 1, for the layer-by-layer manufacture of 3D objects, based on the properties of the particulate material with improved accuracy and reliability, wherein the method comprises:
(a) distributing a layer of particulate material, the layer providing a build bed surface 12;
(b) optionally, preheating the build bed surface to a preheat temperature value lower than the melting temperature of the particulate material;
(c) measuring a first temperature value TD within a test region 50 with the primary thermal sensor 72 positioned above the build bed surface 12 or with a secondary thermal sensor 74 positioned above the build bed surface 12;
(d) depositing an amount of absorption modifier, such as a radiation absorber, over at least one of the test region 50 or a surrounding area surrounding the test region 50; wherein the test region (e.g. position and area within the build bed surface 12) may be predefined by means of instructions for depositing the absorption modifier, such as instructions for a droplet deposition head;
(e) heating the test region 50 over a period of time, wherein the test region 50 preferentially absorbs the radiation of the heat source compared to the surrounding region surrounding the test region 50;
(f) measuring a second temperature value TR within the test region 50 with the primary thermal sensor 72; and
(g) distributing a further layer of material over the preceding layer, the new layer providing the build bed surface 12;
   - repeating the layer cycle of steps (b) to (g) such that the test region 50 of each further layer reaches a higher temperature value TR than that of the preceding layer, at least until the particulate material within the test region 50 starts to sinter, or melts; and
   - determining a set point for the primary thermal sensor 72 from a characteristic of the material as identified from the evolution of the measured first and second temperature values of TD and TR within the test region 50. The determined set point may then be applied to subsequent measurements of the primary thermal sensor 72 such that they are calibrated temperature measurements with respect to the melting point of the particulate material.

The method is based on at least two temperature measurements, namely TD and TR, each taken at a different time of the layer cycle. Furthermore, it was found that a more relevant correction may be determined when the thermal cycle during the calibration routine is designed to be similar to that of a standard build process. For example, where the standard build process is that of a distribution module 32 and a heat source L 1 moving back and forth, the calibration process applies a sequence in which the distribution module 32 and heat source L1 are moving in the same way as during the build process.

The duration of heating determines in part the amount of energy transferred to the test region 50. The amount of energy may further be determined by at least one or more of the power input to the heat source L1, the absorption of heat due to the absorption modifier in relation to the wavelength spectrum of the heat source L1, and the coverage of the absorption modifier over the test region. By suitably altering any, or any combination, of these variables for example, heating to a higher temperature value TR within the test region 50 of the further layer, compared to that of the test region of the preceding layer, may be achieved. In general, the method and its variants described apply to two approaches of causing sintering/melting of the test region 50, by:
(i) applying an absorption modifying fluid in the form of a radiation absorber over the test region 50, such that the test region 50 absorbs more radiation from the heat source L1 compared to the surrounding area surrounding the test region 50. In this case step (d) comprises depositing a radiation absorber over the test region 50;
(ii) applying an absorption modifying fluid in the form of an absorption inhibitor over the test region 50, such that the test region 50 absorbs more radiation from the heat source L1 compared to the surrounding area surrounding the test region 50. In this case, more absorption inhibitor per unit area (or a second absorption inhibitor having a stronger radiation inhibiting effect than the first) may be deposited over the surrounding area compared to over the test region 50 in combination with applying more heat to the test region by increasing the input power to the heat source, and/or decreasing the amount deposited over the test area 50. Step (d) may, therefore, comprise depositing an amount of absorption modifier, such as an absorption inhibitor, over at least one of the test region 50 or a surrounding area surrounding the test region 50.

The absorption modifier (radiation absorber or absorption inhibitor) may be deposited in any suitable form, such as in fluid form deposited by a droplet deposition device, or in powder form, using a powder deposition device.

Furthermore, the radiation of the heat source L1 referred to herein is preferably infrared radiation, and the absorption modifier may in general terms be arranged to cause the test region 50 to heat up more than the surrounding area following the step (e) of heating. The infrared radiation absorber may be carbon black, and the infrared absorption inhibitor, or inhibitor, may be water acting as a coolant, or a reflector reflecting radiation of the heat source L1. However, other wavelength spectra may be suitable in combination with respective absorption modifiers and particulate materials. Where the absorption modifier is inhibitor, the entire layer may be provided with inhibitor such that the surrounding area surrounding the test region 50 is provided with an amount of inhibitor that prevents melting of the particulate material, and such that the test region 50 is provided with successively decreasing amounts of inhibitor for successive layers. In this way, each successive test region 50 heats up more than the preceding test region 50, while the surrounding area surrounding the test region 50 may remain at substantially the same temperature overall.

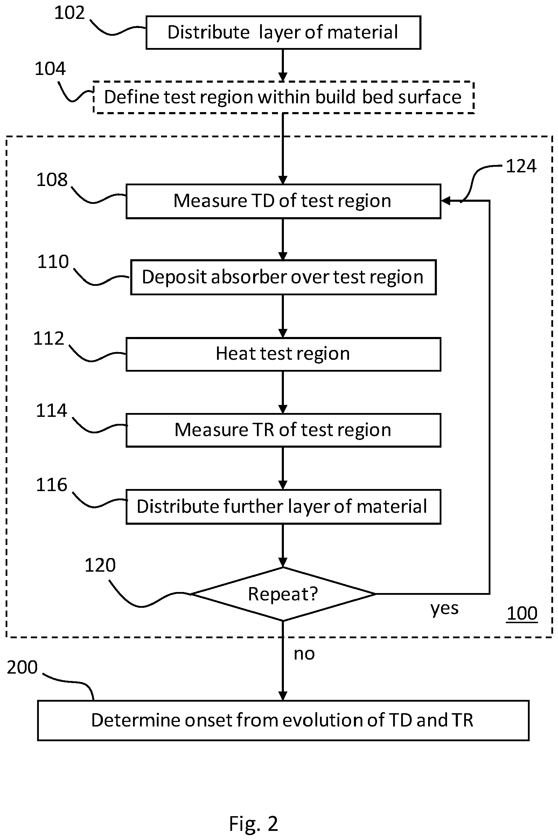

The method and its variants will be described further with reference to the flow charts of Figures 2 to 4 with respect to use of a radiation absorber; however, it should be noted that equivalent effects may be achieved by use of absorption inhibitor deposited in an appropriate manner, and as may be readily implemented by the skilled person.

Turning first to Figure 2, block 100 comprises the sequence of processing steps of each layer during the calibration sequence according to the method above. Initially, a layer of material is distributed at block 102, and, optionally, the test region 50 is defined at block 104 (it may simply be defined as part of the instructions for operating a droplet deposition head depositing the absorption modifier at block 110). The layer and further layers may, for example, be distributed by a roller pushing a portion of particulate material across the build bed 14, or by a device that releases a uniform amount of material, from an overhead reservoir, to form the build bed surface 12.

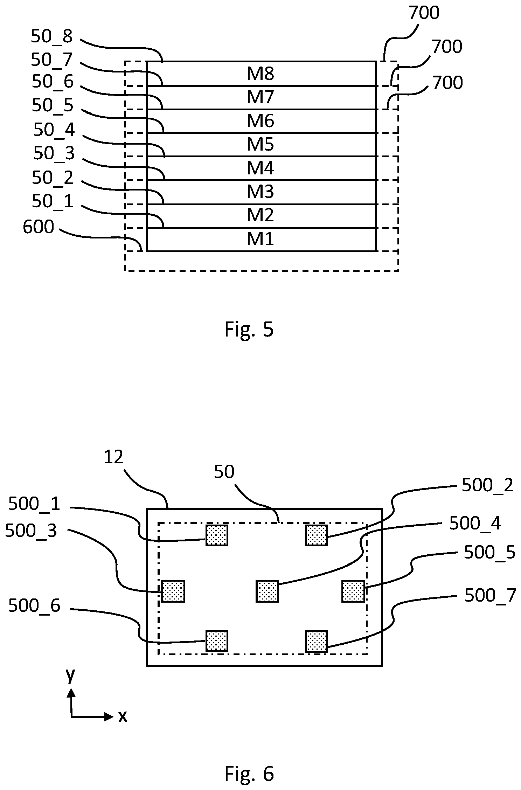

The test region 50, at block 104, may be defined over any location of the build bed surface 12 and may have any suitable size. The test region 50 may be as illustrated in Figures 1A and 1B, or it may comprise a plurality of test areas 500_n distributed across the build bed surface 12, as will be described with reference to Figure 6. The test region 50 may be defined digitally by providing location data to the controller 70.

At block 108, following distribution, the primary sensor 72, or a secondary thermal sensor 74, is used to measure the temperature value within the test region 50 of the distributed layer. The secondary thermal sensor 74 may be a sensor mounted underneath the carriage 30 and above the build bed surface 12, for example close to and following, with respect to the direction of movement, the distribution device 32. The measured temperature value is indicated by the temperature value TD.

Next, at block 110, an amount of radiation absorber is deposited uniformly over the test region 50. The radiation absorber may be comprised within a fluid and the droplet deposition module 38 may comprise a droplet deposition head, such as a drop-on-demand inkjet printhead, configured to deposit the radiation absorbing fluid. At block 110 therefore, the step of depositing the amount of radiation absorber over the test region 50 may comprise depositing the amount of radiation absorber over the test region 50 using a droplet deposition head, thereby forming a "printed test region". The amount of radiation absorber may be determined by the volume of the fluid deposited by the droplet deposition head, per unit area, over the test region 50.

After deposition of the radiation absorber, the test region 50 is heated at block 112. The step of heating at block 112 may be carried out by passing a heat source L1, as indicated in Figure 1A and 1B, across the layer while operating the heat source L1, wherein the wavelength spectrum of the heat source L1 is such that it preferentially heats the test region 50 comprising radiation absorber, compared to the particulate material surrounding the test region 50. The period of time over which the test region 50 is heated may, therefore, be determined by the speed at which the heat source L1 traverses and transfers heat to the test region 50. Alternatively, the test region 50 may be heated by a stationary heat source, for example by an overhead heater 20, shown in Figure 1A, provided that the wavelength spectrum of the overhead heater 20 is such that it preferentially heats the test region 50 comprising radiation absorber, compared to the particulate material surrounding the test region 50. The period of time over which the test region 50 is heated is, in this case, determined by the duration over which the overhead heater 20 is operated.

At block 114, following heating at block 112, a temperature value TR is measured by the primary sensor 72 within the test region 50, and a further, new layer of particulate material is distributed, at block 116.

Next, the series of steps indicated by blocks 108 to 116 is repeated along loop 124, as many times as necessary, as determined at decision point 120. For each repeat, the test region 50 of each layer is heated to a higher temperature value TR than that of the test region 50 of the preceding layer, at least until the layer starts to melt. In some variants, the loop 124 may be repeated for a predefined, fixed number of repetitions within which melting may be expected. For example, from previous testing the conditions for melting may be predefined, for example after one or more of a certain number of layers; exceeding a certain number of droplets of radiation absorber per unit area of the layer specific region; and exceeding a certain lamp power(s). Alternatively, the layer-specific region may be monitored in real time with an optical sensor which records a colour density change, or a change in the reflectivity as the layer specific region starts to melt and becomes reflective.

Once the required number of layers has been processed, as determined at decision point 120, the method continues to block 200 to determine the set point for the primary thermal sensor 72 from the evolution of the two measurements of TD and TR. The step of determining a set point for the primary thermal sensor 72 may comprise identifying a characteristic behaviour in the evolution of the measured temperature value TD, of the test region 50, of one of the distributed (and optionally preheated, as further described below) layers and determining a temperature value to be used as set point for the thermal camera scale from a measurement of TR of the test region 50 in the preceding layer to the one layer.

As the material starts to melt, it may continue to partially melt/sinter by surface melting of the particles so that the particles fuse, at least, at the boundaries between particles, or it may melt fully, in either case forming a fused mass of material. The onset of melting represents the start of a phase change, at which a change in the thermal behaviour of the particulate material may be expected. A characteristic of the melting point of a material may, for example, be a change in the rate of increase of the temperature value TR over the number of layers due to the latent heat of fusion. The set point may thus relate to a characteristic material property represented by a phase transition, such as the melting point, but may, in modifications of the process, be the glass transition point or the crystallisation point.

It should be noted that it is not necessary to correct the scale of the thermal sensor 72 to an absolute scale, as may be determined from an external measurement by e.g. a calorimeter. Instead, it is sufficient to apply a set point, relative to the particulate material properties, to subsequent measurements of the primary thermal sensor 72, as determined by the methods disclosed herein, and to control subsequent thermal procedures based on the thermal sensor readings relative to this set point.

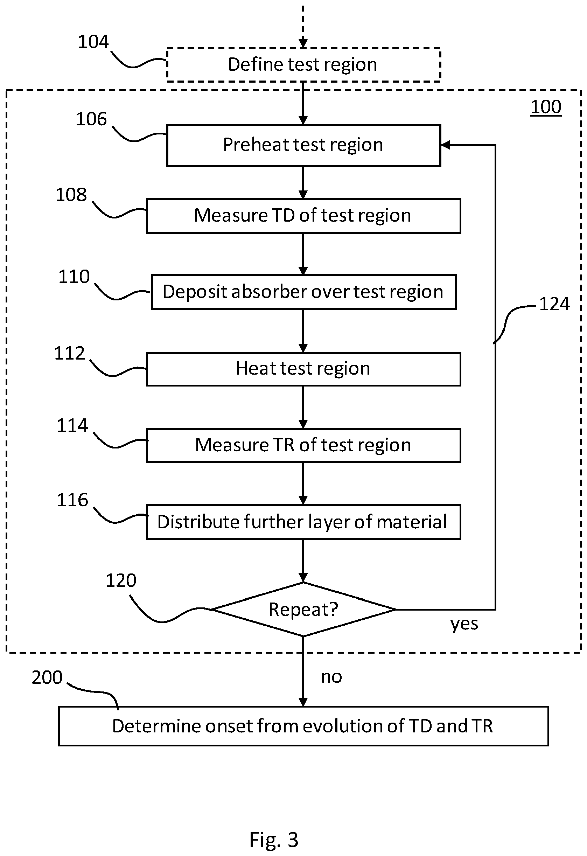

The distributed layer has a significant cooling effect on the build bed surface 12 of the previous layer, which is at a significantly higher temperature, and it is desirable to immediately increase the temperature of the distributed layer to, or closer to, the target layer temperature of the build bed surface 12. This prevents warping of the fused parts by avoiding high temperature differentials. An additional preheating step is illustrated in the flowchart of Figure 3, which is a preferred variant of the flow chart of Figure 2. The initial step of process sequence 100 of distributing a layer, at block 102 in Figure 3, is not shown but applies equally as for Figure 2.

In the flow chart of Figure 3, block 100 comprises block 106, which is a step of preheating the test region 50 following the optional step of defining the test region 50, at block 104. The preheating step, at block 106, is also applied to every new layer as distributed at block 116. This means that at decision point 120, the repeat loop 124 may be initiated to loop back to block 106, as indicated by the dashed arrow, as optional loop back point of loop 124. The step of distributing each layer at block 116 may therefore be followed by a step at block 106 of preheating each layer to a preheat temperature value before the step of measuring the temperature TD of the test region 50, at block 108, wherein the preheat temperature value is higher than the solidification temperature, and lower than the melting temperature, of the particulate material.

Any suitable heating device, such as overhead heater 20 and/or moveable preheat source L2, as shown in Figure 1A and 1B, may be provided to preheat each newly distributed layer to a preheat temperature towards or to the target layer temperature. Where a moveable preheat source L2 is used, the step of preheating each distributed layer may, therefore, comprise passing a moveable preheat source L2 across the layer while operating the preheat source L2 to preheat the test region 50 to the preheat temperature. The wavelength spectrum of the preheat source L2 is such that, over a preheat period of time, the preheat source L2 is capable of preheating the test region 50 when not comprising radiation absorber. As for the heat source L1, the period of preheat time may be determined by the speed at which the preheat source L2 traverses the test region 50 and transfers heat to the particulate matter of the test region 50. The speed may be the same as that of the heat source L1.

Providing a preheat source L2, as part of the sequence of determining a set point for the measurement of the primary thermal sensor 72, provides a calibration process that closely resembles the thermal conditions of a build process. It has been found that this provides additional improvements in the correspondence of the powder behaviour during determination of the set point to that in a normal build process.

It should be noted that it is not necessary to immediately proceed from one layer, of the layer cycle 100 described herein, to the next layer. The method may equally function if, between adjacent layer cycles of the number of layer cycles, a different layer cycle to the number of layer cycles is carried out, such as a number of unprocessed, blank layers that are distributed without the steps of depositing absorption modifier and heating with the heat source L1 at block 112. Thus, one or more intermediate layer cycles are applied that are different to the layer cycle of the disclosed calibration method.

For each further layer cycle 100 of the method disclosed herein, the amount of heating of the test region 50 is increased. The amount of heating may be increased over that of the preceding layer in different ways, for example by one or more of the following:
- Increasing the power to the heat source L1 so as to increase the power input to the test region 50, for example by prolonging the ON period per operational period, or duty cycle, of the heat source;
- Changing the wavelength spectrum of the heat source L1 to one more readily absorbed by the radiation absorber, for example the heat source L1 may comprise a set of heat sources L1_n, each operable to output radiation of a different spectrum. The heat sources may be operated in pairs or separately for each layer cycle 100, to cause increased energy absorption by the radiation absorber;
- Decreasing the speed at which the heat source L1 is passed over the test region 50;
- Increasing the amount of radiation absorber deposited per unit area (or conversely, decreasing the amount of absorption inhibitor deposited per unit area, where absorption inhibitor is used instead of radiation absorber, while keeping the amount of inhibitor over the surrounding area constant or increasing it) over the test region 50.

In the first three cases, where absorption inhibitor is used, the surrounding area surrounding the test region is provided with an amount of inhibitor sufficient to prevent melting/sintering, and the test region 50 is provided with a lower amount of inhibitor that eventually, with sufficient input of energy from the heat source L1, allows the particulate material of the test region 50 to start to melt.

It has been found that the fourth option provides an efficient approach and improved reliability of the determined set point. It is known that changing the input power of a heat source L1 may affect the radiated energy due to changes in the temperature of the actual heat source L1. In addition, thermal lag of the heat source L1, when changing duty cycle, requires a period of stabilisation at each different power setting. Furthermore, changes in speed of the heat source L1 might cause different flow behaviour near the build bed surface 12, and thus the test region 50. While these changes may be small, they appear to be significant enough to affect the reliability in determining a suitable set point for the primary thermal sensor 72. Thus, by using, at least predominantly, the amount of absorber to alter the level of heating of each layer, all other variations may be kept to a less significant level, and the accuracy of the determination of the set point for the thermal sensor 72 may be improved. In this way it is possible to apply a layer cycle 100 in which the input power and radiation spectrum of the heat source L1 and of the preheat source L2 are kept the same as for all other layer cycles. Where the heat source L1 is a moveable source, it is further preferable that the speed of passing the heat source L1 over the test region 50 remains the same for each layer, so as to keep the thermal impact of the heat source L1 over the build bed surface 12 the same at all locations. In this way, unknown and uncontrollable thermal variation may be avoided.

The temperature to which the test region 50 is heated may, preferably, be solely, or at least predominately, be determined by the amount of absorption modifier (e.g. radiation absorber). The amount of absorption modifier, and thus the level of absorption, may be varied for each layer so as to increase the level of heating of the test region 50 by one or more of the following, in broad terms regarding absorption modifier:
(i) *the coverage of the absorption modifier* over the test region 50 as defined by the amount of absorption modifier per unit area. For each subsequent layer, the method may thus comprise depositing a further amount of absorption modifier per unit area over the test region 50, wherein each further amount of absorption modifier per unit area is different to the preceding amount of absorption modifier per unit area. In the case of radiation absorber, the amount of radiation absorber deposited per unit area over the test region 50 for each further layer may thus be higher than that deposited over the test region 50 of the preceding layer. Varying the amount of absorption modifier for each subsequent layer may conveniently be achieved by providing the absorption modifier comprised within a fluid, and depositing the amount of absorption modifier over at least one of the test region 50 and a surrounding area surrounding the test region 50 using droplet deposition module 38. The module 38 may comprise one or more droplet deposition heads, such as drop-on-demand inkjet heads. In the case of radiation absorber, the radiation absorbing fluid is deposited over the test region 50 only. In the case of absorption inhibitor, the fluid may be deposited in different amounts per unit area over the test region 50 and over the surrounding area, such that the surrounding area absorbs less radiation from the heat source L1 than the test region. The coverage may be defined by one or both of the print pattern, determining the spacing between drops deposited (as controlled by the printed image pattern and/or by a dither scheme), and the volume of each drop deposited at each location on the test region 50. For certain droplet deposition modules 38, the volume of radiation absorber per unit area may be altered by changing the number of drops deposited per location (e.g. per defined voxel), or by changing the actual volume of the drops deposited per location over the test region 50. For example, a drop-on-demand printhead capable of depositing different drop volumes, or multiple smaller droplets to form the drop volume, may be used to deposit one droplet, or the smallest drop, per voxel for a low heating effect, and multiple droplets/a larger drop to achieve a higher heating effect. In addition, a dither scheme may be applied for further degrees of freedom to space the drops or droplets out by defining which voxels are to receive the fluid, such as by defining that only 20% of the voxels are to receive a defined number of one or multiple droplets in a randomly distributed manner. For each further layer, therefore, one or more of the following may be used to alter the coverage, or amount, of absorption modifier per unit area over the test region 50 at block 110:
   - depositing a different number of drops of fluid (in the case of a radiation absorbing fluid, a higher number of drops; in the case of inhibitor fluid, a lower number of drops), per unit area, over the test region 50, compared to the number of drops deposited, per unit area, over the test region 50 of the preceding layer, where the volume per drop may be substantially constant. In a specific example, a radiation absorbing fluid of fixed absorber pigment loading is provided. The absorbing pigment may be carbon black. By depositing increasing absorber amounts per unit area of the test region 50 for each layer, using a droplet deposition head capable of depositing the fluid at different spacings and/or volumes, the temperature to which the test region 50 will heat, when being heated by the heat source L1, may be increased; and
   - depositing drops of fluid of a different volume (in the case of a radiation absorbing fluid, a larger volume of drops; and in the case of inhibitor fluid, a smaller volume of drops) per unit area over the test region 50, compared to the volume of each of the drops deposited per unit area over the test region 50 of the preceding layer. Thus, radiation absorber may be deposited over the test region in the form of droplets using a droplet deposition head, wherein the step of depositing each further amount of radiation absorber comprises, compared to the preceding amount of radiation absorber, one or more of depositing a larger amount of radiation absorber per unit area over the test region; and depositing a different radiation absorber capable of absorbing a higher amount of energy of the radiation spectrum provided by the heat source than the preceding radiation absorber. In each case, at least one of the further amounts is sufficient to cause the particulate material of the test region to start to melt such that the melting point may be determined.

Per layer, the absorption modifier may be deposited during one pass over the test region 50 of the droplet deposition module 38, or in more than one pass, such that the step of depositing a further amount of absorption modifier, at at least one of the blocks 110, comprises, compared to the preceding amount of absorption modifier, depositing a higher number of droplets of fluid per unit area over the test region 50 (e.g. where the absorption modifier is radiation absorber) or the area surrounding the test region (e.g. where the absorption modifier is absorption inhibitor) by operating the droplet deposition head while passing it more than once over the test region 50 of the further layer.

(ii) *the type of absorption modifiers.* Multiple absorption modifiers (e.g. radiation absorbers) may be provided to the apparatus 1 such that, for each further layer, a different absorption modifier is deposited over the test region 50, wherein each different absorption modifier is capable of causing the particulate material of the test region 50 to absorb a different amount of energy of radiation from the heat source L1 compared to the absorption modifier deposited over the test region 50 of the preceding layer. In a variant, the different absorption modifiers may be such that each absorption modifier comprises a different colour of absorption modifier (radiation absorber or inhibitor), capable of absorbing a different, larger, amount of energy of the radiation spectrum provided by the heat source L1, compared to that of the preceding amount of absorption modifier (radiation absorber or inhibitor).

The different absorption modifiers may be comprised within, or be in the form of, fluids deposited by different droplet deposition heads comprised within the droplet deposition module 38, or by different droplet deposition modules 38.

For example, for each further layer, a different fluid may be deposited by one or more respective further droplet deposition heads, wherein the different fluid is capable of causing the particulate material of the test region 50 to absorb a higher amount of energy of the radiation of the heat source L1, than the preceding fluid. The different fluid may comprise a different absorption modifier, capable of absorbing a different amount of energy of the radiation provided by the heat source L1 than the preceding radiation absorber; and/or a different concentration e.g. expressed in percent weight per volume of absorption modifier compared to that of the preceding fluid.

Where the absorption modifier is a radiation absorber provided in form of a fluid, or comprised within a fluid, each step of depositing a further amount of radiation absorber at block 110 may comprise depositing a different radiation absorber capable of absorbing a higher amount of energy of the radiation spectrum provided by the heat source L1 than the preceding radiation absorber; and/or depositing a higher concentration of radiation absorber compared to that of the preceding fluid. For example, two or more types of fluid may be provided within the apparatus 1, each comprising the same radiation absorbing substance but at different concentrations, for example an infrared radiation absorbing substance at higher concentration than the radiation absorber deposited over the test region 50 of the preceding layer. Multiple droplet deposition heads may thus be configured to deposit multiple different absorbers, which may comprise different infrared radiation absorbing dyes, pigments, or the same infrared radiation absorbing dyes or pigments but at different concentration, each having a different level of absorption of the wavelength spectrum of the heat source L 1.

In a further example, different colours having different absorptive properties are provided, for example in the form of different fluids each comprising a different pigment or dye, each having a different absorption spectrum. A first absorber colour, representing a first amount of absorption modifier, may be arranged to absorb the lowest amount of radiation provided by the heat source L1; a second colour, representing a second, further amount of absorption modifier, may be arranged to absorb more of the heat source L1 radiation than the first; a third colour more than the second and so on.

The different colours may be deposited over the test regions 50 of successive layers, potentially with combinations of one or more other ones of the different colours, to provide gradation in absorption, and thus in the increase in temperature, of the layer when heated by the heat source L1. For example, a colour deposition scheme, similar to colour printing, may be applied, in which each colour is capable of absorbing a different amount of the heat source radiation. The further radiation absorber (or absorption modifier) may be deposited in the form of a pattern of a preceding fluid, comprising radiation absorber (or comprising absorption modifier), and a subsequent fluid, comprising radiation absorber (or comprising absorption modifier). The two patterns are arranged to overlap by operating respective droplet deposition heads while passing them over the test region 50 of the further layer. The further fluid comprising radiation absorber (or radiation modifier) is capable of absorbing an intermediate amount of energy of the radiation spectrum provided by the heat source L1, compared to the preceding and subsequent fluid comprising radiation absorber (or comprising absorption modifier).

More broadly, the radiation absorber (or absorption modifier) may be deposited in the form of a multi-fluid pattern, wherein the multi-fluid pattern deposited over the test region 50 of each further layer is different to that deposited over the test region 50 of the preceding layer, and such that the test region 50 is capable of absorbing a higher amount of energy of radiation, provided by the heat source L1, compared to the test region 50 of the preceding layer. The number of droplets (or the type of fluid) achieving melting may be predetermined and the number of droplet increased (and/or the types of fluid selected to achieve progressive heating until melting occurs) until at least this number (and/or type of fluid) is reached as determined at decision point 120.

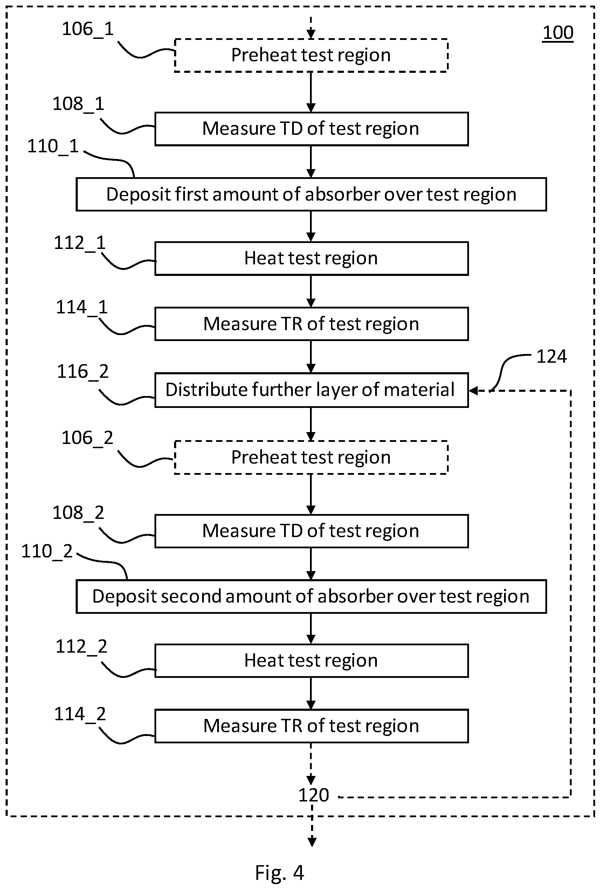

Turning to Figure 4, more detail on the heating steps, at block 110 of the flow charts of Figures 2 and 3, will now be described. For ready comparison, two layer cycles 100 are shown. The initial steps, namely that of distributing a layer at block 102 and of optionally defining the test region at block 104, are not shown but apply equally as for Figure 2. In the first cycle 100, a layer is provided and the test region 50 is defined that may, optionally, as indicated by the dashed outline, be preheated at block 106_1. At block 108_1, the temperature value TD_1 is measured by the primary sensor 72 or by a secondary sensor 74. Next, at block 110_1, a first amount of radiation absorber M1 is deposited over the test region.

At block 112_1, the test region 50 is heated to a temperature, as determined by the first amount of radiation absorber M1 deposited per unit area of the test region. The temperature value TR_1, also as determined by the first amount of radiation absorber M1 (potentially lower than the actual value heated to, due to, for example, a short delay between heating and measuring) is measured by the primary thermal sensor 72 at block 114_1. A fresh layer of particulate material is distributed at block 116_1 and the second cycle is initiated at decision point 120.

In the second cycle, at optional block 106_2, the test region 50 may be preheated. At block 108_2, the temperature value TD_2 is measured by the primary sensor 72 or by a secondary sensor 74.

Next, at block 110_2, a second amount of radiation absorber M2, larger than the first amount M1, is deposited over the test region 50.

At block 112_2, the test region 50 is heated to a temperature value, as determined by the second amount of radiation absorber M2 deposited per unit area of the test region 50. At block 114_2, the temperature value TR_2 is measured by the primary thermal sensor 72. TR_2 is also determined by the second amount of radiation absorber M2, potentially after a short period of cooling due to a delay between heating and measuring.

After this, the layer cycles 100 may continue, along loop 124, as determined at decision point 120 (indicated by dashed lines) with a third, fourth amount Mn of radiation absorber and so on, each new amount being higher than the previous one, so as to cause an increase in the heating of the test region 50 and of the measured temperature value TR_n for each successive layer.

Once the loop 124 is terminated at decision point 120, the method progresses to sequence process 200, as shown in Figures 2 and 3.

The thermal sensor (primary thermal sensor 72, or, optionally, secondary thermal sensor 74) at each block 108 may measure the temperature value of the test region 50 before or after preheating the distributed layer. In other words, the order of preheating the test region 50 at blocks 106 and measuring the temperature value TD at blocks 108 may be reversed.

In variants of Figure 4, blocks 110_1 and 1102 may comprise depositing a first type of radiation absorber (or colour) over the test region 50 (at block 110_1) and depositing a second (further) type of radiation absorber (or colour) over the test region (at block 110_2), wherein the second type of radiation absorber (or colour) causes a temperature value TR to be higher than that caused by the first type of radiation absorber (or colour) deposited over the test region 50 of the previous layer.

A test object resulting from the test regions 50 of the successive layers, processed according to the flow chart of Figure 4, is schematically illustrated in Figure 5, in which the amount of radiation absorber for each layer is indicated by Mn. Here for example, the onset of melting may be caused by the amount of radiation absorber M6 of the test region 50_6 of the sixth layer, and for which a temperature value TR_6 is measured, as may be identified from the measured temperature value TD_7 of the distributed (and optionally preheated) subsequent test region 50_7 of the seventh layer. The set point for the primary thermal sensor 72 may thus be defined as the temperature value TR_6, so as to be related to the onset of melting of the particulate material. In a variant of the method, therefore, the amount of radiation absorber may be increased for each new layer, such that for each further layer, the amount of radiation absorbing fluid deposited per unit area over the test region 50 is larger than that deposited per unit area over the test region of the preceding layer.

With respect to the example of Figures 4 and 5, the onset of melting may be expected to occur for layers with radiation absorber amounts M4 to M7, and a predefined number of layers may be processed, by repeated loop 124, a predefined number of times and as tracked at decision point 120.

In the examples, the amount of radiation absorber deposited over the test region 50 of each further layer, for example as provided in form of a radiation absorbing fluid, may be increased by a fixed amount over that deposited over the test region 50 of the preceding layer; however, this is not essential. Furthermore, it is not essential to provide a linearly increasing rate of heating between the layers.

### Primary and secondary thermal sensors

The primary thermal sensor 72 may be a thermal camera having a high resolution array of individual pixel sensors, or it may be a pyrometer or an array of pyrometers. As described above, different groups of pixels may be used to measure different zones on the build bed surface 12, or different pixels may measure the temperature values of TR and TD at different locations or areas of the test region 50.

The secondary thermal sensor 74 may be a single sensor, a series of sensors, or an array of sensors mounted underneath the carriage 30, for example close to the distribution device 32 or close to the preheat source L2. In this case, the step of measuring the first temperature value TD, within the test region of each layer, is carried out by the secondary thermal sensor 74. The steps of distributing each new layer and measuring the first temperature value TD of the test region 50 of the new layer comprises passing the distribution device 32 and the secondary thermal sensor 74 across the preceding layer while distributing a new layer to form the build bed surface 12 and to measure the first temperature value TD within the test region 50.

### Measured temperature values and test region

The temperature values TD and TR as measured unlikely represent true temperatures of the test region 50, but are offset by an amount to be corrected. Therefore, temperature values TD and TR are referred to as "temperature values" rather than "temperatures". Furthermore, it should be noted that, depending on the arrangement of the heat source L1 and/or preheat source L2 and the use of a secondary thermal sensor 74 over the primary thermal sensor 72, the first and second temperature values TD and TR may be measured only after a respective delay following the distribution of the layer at block 116 and heating of the layer at block 112. This delay may be due to the test region 50 being obstructed from the field of view of the primary thermal sensor 72 by the distribution device 32, as it passes underneath the sensor, and where a moveable heat source L1 is used in combination with the primary sensor 72, also by the moveable heat source L1, as it passes underneath the sensor. With regard to the arrangement of the carriage 30 in Figure 1A and 1B, in which the components for distribution, optional preheating, fluid deposition and heating are provided on the same carriage 30, a gap or viewing window may be provided between the distribution device 32 and the droplet deposition module 38 (or, optionally, between the preheat source L2 and the droplet deposition module 38, where a preheat source L2, mounted to the carriage, is used) so as to allow the primary sensor 72 to measure the test region 50 immediately following distribution of a new layer. In other arrangements, the distribution device 32 may be provided on a separate carriage to the droplet deposition device 38 and the heat source L1. It is not essential that the temperature values TR and TD are measured over the entire test region 50. The measurement of one or both of the temperature values TD and/or TR is carried out within the test region 50, such that it may relate to a sub-region of the test region 50, or it may, for example, relate to one or more temperature values sensed by more than one sensor 72/74, or group of sensor pixels, over some or all of the test region 50.

Certain pixel groups of the sensor array of the primary thermal sensor 72 may be arranged to monitor corresponding zones of the build bed surface 12. Likewise, a plurality of pixels may be arranged such that each of the plurality of pixels measures a first and second temperature value TD, TR for a corresponding one of a plurality of locations or areas of the test region 50. The steps of measuring the temperature values TD, TR may thus comprise measuring a plurality of first and second temperature values of TD and TR for each of a corresponding plurality of locations or areas located over the test region 50; and determining an average first and second temperature value TD and/or TR from the measured first and second temperature values TD and/or TR measured by the plurality of pixels for the plurality of locations or areas of each layer.

In other words, the test region 50 may comprise a plurality of test areas distributed over the build bed surface 12 that may or may not form a continuous combined test region 50. As illustrated by way of example in Figure 6, a plurality of test areas 500_1 to 500_7 may be arranged at discrete locations, which together represent the test region 50. Referring to the flow chart of Figure 2, at block 104 therefore, the step of defining a test region 50 may comprise defining a plurality of test areas 500_n distributed over the build bed surface 12. At least one of the steps at block 108 and at block 114 comprises measuring, within each test area 500_n, with a corresponding one or more pixels of the plurality of primary sensor pixels, the first temperature value TD (block 108) and the second temperature value TR (block 114). At block 200, the set point may thus be determined for each of the plurality of pixels of the primary sensor 72 based on at least one of the first and second measured temperature values TR and TD for each test area 500_n of each layer.

The measured temperature values TR, TD may thus be average measured temperature values TR, TD determined from measurements of TR and TD at a plurality of locations over each test area 500_n (or over the test region 50, where no test areas 500 are defined).

For each group of one or more of the plurality of pixels, a respective set point may be determined from the evolution of the measured respective temperature values of TR and TD measured by that group.

Alternatively, an overall average set point may be determined for the pixels of the primary thermal sensor 72. Where the test areas 500_n are measured by all pixels of the sensor, the average set point may be determined from the measurements of TR and TD by each of the plurality of pixels.

The test areas 500_n may, therefore, be defined to correct position dependent deviations of the thermal measurements, for example due to the optics of the primary thermal sensor 72. For each pixel, or for each group of pixels, of the plurality of pixels, a respective correction factor or offset value, with respect to the overall average set point, may be determined and applied to future measurements of the primary thermal sensor pixels. In other words, a per-pixel digital correction mask may be defined to correct future measurements of the primary thermal sensor 72.

Furthermore, it is not essential that the subregion over which the temperature value TD is measured at block 108, following distribution (or preheating, if present), is the same subregion over which the temperature value TR is measured at block 114, following deposition of radiation absorber and heating. The subregions may overlap or may be distinct subregions within the test region 50. It is furthermore not essential that each cycle comprises a single layer only. In variants, each layer may comprise a set of sublayers, and each sublayer is processed according to the same steps of distributing (and optionally of preheating), depositing radiation absorber and heating of that layer. For each layer, the measured temperature value of TD and/or TR may thus be an average temperature of the first and/or second temperature values of TD and TR measured within the test region 50 of one or more of the sublayers of that layer. This may further improve accuracy in the measured temperature values TD, TR. Over, for example, the first few sublayers, thermal stability may be achieved and any temperature values measured ignored, while from the measured temperature values TD, TR of the test region 50 of the remaining sublayers, a respective average temperature value for TD and TR is determined for that layer.

It should be noted that heating the test region 50 may mean irradiating the entire build bed surface 12 while selectively heating only the test region 50, as defined by radiation absorber. In some variants, the test region 50 may be heated selectively by a selective radiation source such as an LED array or a laser; however, it is preferred to mimic the normal build process.

Returning to Figure 5, the test object resulting from the calibration process may comprise layers, towards the start of the sequence, that are not fused, for example those that received a relatively low amount of radiation absorber. This may be, for example, layers 50_1 and 50_2 having the lowest amounts of radiation absorber M1, M2 applied to them. This might mean that in a depowdering process, during which the object is removed from the build bed and the surrounding particulate material recovered to be recycled, the first few layers are not consolidated and may contaminate the surrounding particulate material. In this case it may be beneficial to encapsulate the test object by a fused shell. Such a fused shell is indicated by the dashed outline of a supporting or base test region 600, below the first layer with M1 amount of radiation absorber, and a boundary region comprised of portions 700 of each layer. Each portion 700 may be provided with an amount of radiation absorber that ensures fusing occurs upon heating with the heat source L1, for example an amount M7 or M8 applied to layers 50_7 and 50_8. When a drop-on-demand inkjet printhead is used to deposit the radiation absorber, the boundary regions may easily be created by depositing a higher amount of radiation absorber over the boundary portions 700 that fuses the particulate material during heating at block 112 to form a shell. The topmost layer 50_8 may represent the fused cover of the shell; alternatively, a further layer 600 (not shown) may be provided on top of layer 50_8 to represent the fused cover of the shell.

Before the step of distributing a layer of particulate material and measuring TD, the following steps may thus be carried out one or more times: distributing a base layer of particulate material, the base layer providing the build bed surface 12; defining a base region 600, the base region 600 overlapping with the test region 50; depositing an amount of radiation absorber over the base region 600 of the base layer; and heating the base region 600 over a period of time to cause the particulate material of the base region 600 to fuse. The step of depositing an amount of radiation absorber over the test region 50 of each layer comprises depositing a fusing amount of radiation absorber over a boundary portion 700 surrounding the test region 50, wherein the fusing amount of radiation absorber is an amount sufficient to cause the particulate material within the boundary region to fuse. The step of heating the test region 50 of each layer comprises heating the boundary portion 700 to cause the particulate material of the boundary portion 700 to fuse. In this way, the base region 600 of the base layer, the boundary portions 700 of each successive layer, and, optionally, a top most fused cover region 600, provide a fused shell around the test regions 50 so as to encapsulate them. Where absorption inhibitor is used to define the test region 50, the base region may not comprise absorption inhibitor while the surrounding area surrounding the base region is provided with absorption inhibitor, so that, during the step of heating the base region, the particulate material of the base region sinters/melts, while the surrounding material does not. Similarly, the boundary portions 700 may be left void of absorption inhibitor while the area outside the boundary portions 700 is provided with sufficient absorption inhibitor to prevent it to melt, while the test region 50 inside the boundary region is provided with successively decreasing amounts of absorption inhibitor for each new layer, so that each subsequent test region 50 absorbs more heat than then preceding test region 50. A test object resulting from this variant of the method may thus be formed from sequential test regions 50_1, 50_2,..., such that the test object comprises a fused outer surface and a sequence of inner test layers of increasing degree of consolidation of particulate material. Such a test object is easily removed during a depowdering process and discarded without contaminating any of the unused powder for recycling. Optionally, where multiple test areas 500 are comprised within the test region 50, the test areas 500 may be linked by fused interconnecting regions that form a grid connecting all test areas 500, allowing the test areas 500 to be removed easily during depowdering.

### Direction and timings of method steps

The period of time of heating the test region 50 determines in part the amount of energy transferred to the test region 50. The amount of energy absorbed by the test region 50 may further be determined by at least one or more of the input power of the heat source L1, the absorption of heat, due to the absorption modifier in relation to the wavelength spectrum of the heat source L1, and the coverage of the absorption modifier over the test region 50. As described above, the period of time of heating and/or the power input to the heat source L1 are preferably kept substantially constant and the same for each layer.

In addition, a preferred process provides for improved thermal consistency where the steps of distributing each layer and passing a moveable heat source L1 across each layer, so as to heat it, are carried out in the same, e.g. first, direction, such as from left to right along x, as indicated in Figure 1. Similarly, the steps of distributing each layer and of passing the preheat source L2 across each layer may also be carried out in the same, e.g. first, direction. For example, when the distribution module 32, the preheat source L2 and heat source L1 are provided on a single carriage 30, the steps are carried out when the carriage 30 moves in a first direction. When several carriages are used, for example, where the distribution module 32 and the preheat source L2 are mounted to a first carriage and the deposition module 38 and the heat source L1 are mounted to a second carriage, the steps are carried out when the respective carriages move along the first direction only, and not along a second direction opposite the first direction or perpendicular to the first direction. During movement along the second direction, at least the heat source and the distribution module are not operated. The methods described herein may provide set points of enhanced relevance to a subsequent object build process when, in addition, the subsequent build process for a 3D object comprises the layer cycle 100 of the warm up cycle in form of the steps of distributing a fresh layer, preheating the layer, and heating the layer; preferably carried out in the same direction as those of the calibration process; optionally, the step of depositing radiation absorber may also occur in the same direction. In the case of the build process, the amount of radiation absorber is determined based on object model data. Furthermore, the subsequent object build process, similar to the calibration process, may comprise conditions of operating the heat source L1 and/or preheat source L2 that are substantially the same as those applied during the calibration process. For example, the respective power inputs for each heating and/or preheating step for each layer may be kept substantially the same or, at least, similar as it is made possible by the calibration methods disclosed herein. Where the heat source L1 and/or preheat source L2 is/are a moving heat source, the speed of passing the heat source/preheat source is preferably the same during the layer cycle 100 of the build process and during that of the calibration process.

Preferably, each step of distributing, at block 116, preheating, at block 106, depositing absorption modifier/radiation absorber, at block 110, and heating, at block 112, is carried out at the same constant speed, over the build bed surface 12, in both the calibration method and the subsequent build process, and, preferably further, at respective constant timings between steps. Preferably, the step at block 114, of measuring the temperature of the test region, is initiated after a first time delay from the step at block 112, of heating the test region (or the build bed surface 12) with the heat source L1, and the respective first time delay is the same for each layer. Similarly, the step at block 108, of measuring the temperature of the test region 50, is initiated after a second time delay from the step at block 106, of preheating the test region (or the build bed surface 12) with the second preheat source L2, and the respective second time delay is the same for each layer. The first delay may be the same as the second delay.

Additionally, or instead, the respective time periods between the initiation of each step and the initiation of the next step, in each layer cycle 100, may be constant for each corresponding step in each successive layer cycle 100. For example, preferably, the layer cycle further comprises: initiating the step, at block 116, of distributing each further layer a first time interval after initiating the step, at block 112, of heating the test region 50 (or the build bed surface 12) of each layer, and initiating the step, at block 112, of heating the test region (or the build bed surface 12), after a second time interval from the step, at block 116, of distributing the layer. In a preferred variant of the method, and for the corresponding steps of a layer cycle of a subsequent build process, the respective first and the second time interval remain the same for each layer. Furthermore, for each layer, the layer cycle 100 may further comprise: initiating the step, at block 106, of preheating the test region (or preheating the build bed surface 12) with the second preheat source L2, a third time interval after initiating the step, at block 116, of distributing the layer, and wherein the third time interval is preferably the same for each layer. In this way, the respective return movements, along the second direction opposite the first direction, of the heat source L1, of the preheat source L2, and of the distribution module 32, is also the same for each layer, and thus the duration of the layer cycle 100 is the same for each layer. This is preferable as it provides enhanced thermal uniformity of the process. A subsequent build process may apply the same layer cycle 100 that comprises the steps of distributing a layer of particulate material; preheating the build bed surface 12; depositing absorption modifier over at least one of an object region and a surrounding area surrounding the object region, preferably depositing radiation absorber over an object region, the amount defined by the build process; heating the object region with the heat source over a period of time such that the particulate material within the object region melts; measuring the temperature of the build bed surface at least once after one or more of steps distributing, preheating, depositing and heating; and distributing a further layer of material over the preceding layer of material, the new layer providing the build bed surface. The steps of preheating to distributing are repeated until the object is complete. Preferably, both the calibration process and the build process comprise initiating the step of distributing each further layer after a first time interval from initiating the step of heating the test or object region with the heat source, and initiating the step (e) of heating the test or object region with the heat source after a second time interval from the step (g) of distributing the layer; initiating the step (b) of preheating after a third time interval from initiating the step (g) of distributing the layer; wherein the first, the second and the third time interval are of the same respective duration for each layer, such that the duration of processing each layer is constant throughout the calibration process and the build process.

Preferably after at least one or more of the layer cycle steps of the warm up process and preferably in the same way of the build process, the method may comprise: a step of measuring the temperature of the build bed surface 12 using the primary thermal sensor 72, and a step of heating each layer with the stationary heat source (20) positioned fixedly above the build bed surface, by operating the stationary heat source (20) based on the one or more temperature measurements of the build bed surface (12) by the primary thermal sensor (72) and with respect to a predefined target layer temperature between the solidification temperature and the melting temperature of the particulate material. The stationary heat source (20) may be operated continuously throughout the layer cycle 100 of the calibration process and preferably also of the build process.

Furthermore, in a preferred variant of the method, the first and second heat sources L1 and L2 are operated continuously as they move over the build bed surface 12. Thus the velocities and input powers applied to the heat sources L1 and L2 and to the distribution module 32 relate to the duration over which the respective heat source and the powder distributor are moved over the build bed surface 12.

Additionally, the step of heating may be carried out at a constant power input to the heat source L1 for the period of time over which the test region 50 is being heated and the step of preheating may be carried out at a constant power input to the preheat source L2 for the period of time over which the test region 50 is being preheated. In this way, the amount of absorption modifier may predominantly determine the level of heating of the test region 50 for each layer during the calibration process and also in the subsequent build process.

The method and its variants as described may be carried out by a controller 70 of the apparatus 1 and configured to carry out any of the method or variants in part or fully. The controller 70 may, for example, control the power input to one or more heating devices of the apparatus 1, during a subsequent object build process, based on the determined set point. Corrections based on the determined set point may be applied to the temperature measurements of each group of pixels or to each pixel of the primary thermal sensor 72. The set point may be determined again at any time to adjust for changes in material properties due to recycling rate and/or ageing of at least some of the components of the particulate material. The set point may be applied to the scale of measurements by the primary thermal sensor 72 to any subsequent temperature measurements by the primary thermal sensor 72. The temperature scale corrected in this way takes into account the properties of the particulate material, and may be determined again at any point, using the methods disclosed herein, to adjust for changes in material properties due to recycling rate and/or ageing of at least some of the components of the particulate material.

## Claims

1. A method for determining a set point for a primary thermal sensor (72) in an apparatus for the layer-by-layer manufacture of a three-dimensional object from particulate material; the method comprising a calibration process, comprising:
(a) distributing a layer of particulate material, the layer providing a build bed surface (12);
(b) measuring a first temperature value TD within a test region (50) with one of a primary thermal sensor (72) and a secondary thermal sensor (74) positioned above the build bed surface (12);
(c) depositing an amount of absorption modifier over at least one of the test region (50) and a surrounding area surrounding the test region (50);
(d) heating the test region (50) over a period of time;
(e) measuring with the primary thermal sensor (72) a second temperature value TR within the test region (50);
(f) distributing a further layer of material over the preceding layer of material, the new layer providing the build bed surface (12);
- repeating the steps (b) to (f) of the layer cycle (100), such that the test region (50) of each further layer reaches a higher temperature value TR than that of the test region (50) of the preceding layer, at least until the test region (50) starts to melt;
- determining a set point for the primary thermal sensor (72) from a characteristic in the evolution of the measured first and second temperature values of TD and TR of the test region (50); and
- applying the determined set point to subsequent measurements of the primary thermal sensor (72).

2. The method of claim 1, wherein the layer cycle (100) further comprises a step of preheating each layer to a preheat temperature value following the step of distributing each layer and before the step of measuring the temperature TD of the test region (50), wherein the preheat temperature value is lower than the melting temperature of the particulate material.

3. The method of claim 1 or claim 2, wherein the step of determining a set point for the primary thermal sensor (72) comprises identifying a characteristic in the evolution of the measured first temperature value TD of the test region (50) of one of the layers and determining a temperature value to be used as set point for the scale of the primary thermal sensor (72) from a measurement of a second temperature value TR of the test region in the preceding layer to the one layer.

4. The method of any preceding claim, wherein each layer comprises a set of sublayers, wherein each sublayer is processed according to the same steps of distributing, depositing absorption modifier and heating of that layer, and where present of preheating that layer, and wherein each measured first and second temperature value TD and TR of each layer is an average temperature value based on the respective first and second temperature values TD and TR measured within the test region (50) of one or more of the sublayers for that layer.

5. The method of any preceding claim, wherein the test region (50) comprises a plurality of test areas (500) arranged over the build bed surface (12); wherein the primary thermal sensor (72) comprises a plurality of sensor pixels, such that at least one of
- step (b) comprises measuring the first temperature value TD within each test area (500) with a corresponding one or more pixels of the plurality of primary sensor pixels; and
- step (e) comprises measuring the second temperature value TR within each test area (500) with the or a corresponding one or more pixels of the plurality of primary sensor pixels;
wherein the set point is determined for each of the plurality of pixels based on at least one of the first and second measured temperature values TD and TR for each test area (500) of each layer; optionally, wherein determining the set point for the primary thermal sensor (72) comprises determining an average set point for the plurality of primary sensor pixels based on the measured first and second temperature values TD and TR for each test area (500) of each layer.

6. The method claim 5, wherein determining the set point for the primary thermal sensor (72) comprises determining an average set point for the plurality of primary sensor pixels based on the measured first and second temperature values TD and TR for each test area (500) of each layer; and wherein for each of the plurality of pixels a correction is determined based on the average set point.

7. The method of any preceding claim, wherein the test region (50) of each further layer reaches a higher temperature value TR than that of the test region (50) of the preceding layer by at least one of:
- applying a higher amount of input power to the heat source (L1) during each step (d) of heating compared to the preceding layer, wherein at least one of the higher amounts of input power is sufficient to cause the particulate material of the test region (50) to start to melt; and
- depositing at step (c) absorption modifier at least in the form of a radiation absorber, over the test region (50), wherein the step of depositing each further amount of radiation absorber comprises, compared to the preceding amount of radiation absorber, one or more of:
- depositing a larger amount of radiation absorber per unit area over the test region (50); and
- depositing a different radiation absorber capable of absorbing a higher amount of energy of the radiation spectrum provided by the heat source (L1) than the preceding radiation absorber;
wherein at least one of the further amounts is sufficient to cause the particulate material of the test region (50) to start to melt.

8. The method of claim 7, wherein the absorption modifier is radiation absorber comprised within a fluid and deposited in form of droplets, and wherein depositing each further amount of radiation absorber comprises, compared to the preceding amount of radiation absorber, one or more of:
- depositing a higher number of droplets per unit area over the test region (50);
- depositing droplets of a larger volume per unit area over the test region (50);
- depositing, by a respective further droplet deposition head, a different fluid, wherein the different fluid comprises one or both of:
- a different radiation absorber capable of absorbing a higher amount of energy of the radiation spectrum provided by the heat source (L1) than the preceding radiation absorber; and
- a higher concentration in weight per volume of the radiation absorber compared to that of the preceding fluid;
wherein at least one of the further amounts is sufficient to cause the particulate material of the test region (50) to start to melt.

9. The method of any preceding claim, wherein the step (d) of heating each layer comprises passing a heat source (L1) across the layer while operating the heat source (L1), wherein the period of time of which the test region (50) is heated is determined by the speed of the heat source (L1).

10. The method of claim 2 or of any one of claims 3 to 9 when dependent on claim 2, wherein the step of preheating each distributed layer comprises passing a preheat source (L2) across the layer while operating the preheat source (L2) to preheat the test region (50) to the preheat temperature.

11. The method of claim 10, wherein the steps of distributing each layer, passing the preheat source (L2) to preheat and of passing the heat source (L1) to heat across each layer are carried out in the same direction, optionally wherein the speed of passing the preheat source (L2) and of passing the heat source (L1) over the test region (50) is substantially constant.

12. The method of claim 2, or of any one of claims 3 to 11 when dependent on claim 2, wherein the power input to the heat source (L1) and a power input to the preheat source (L2) is substantially the same for each layer.

13. The method of any preceding claim, further comprising, after at least one or more of the layer cycle steps, a step of measuring the temperature of the build bed surface (12) using the primary thermal sensor (72), and a step of heating each layer with a stationary heat source (20) positioned fixedly above the build bed surface, by operating the stationary heat source (20) based on the one or more temperature measurements of the build bed surface (12) by the primary thermal sensor (72) and a predefined target layer temperature between the solidification temperature and the melting temperature of the particulate material.

14. The method of claim 13, wherein the stationary heat source (20) is operated continuously throughout the layer cycle (100).

15. The method of any preceding claim, wherein a subsequent object build process comprises the same layer cycle steps of the calibration process, wherein for the build process: step (c) of the build process comprises depositing an amount of absorption modifier over at least one of an object region and a surrounding area surrounding the object region;
and step (d) comprises heating the object region with the heat source (L1) over a period of time such that the particulate material within the object region melts;
wherein the layer cycle (100) of the build process is repeated until the object is complete, and wherein both the calibration process and the build process comprise:
- initiating the step of distributing each further layer after a first time interval from initiating the step of heating the test or object region with the heat source (L1), and
- initiating the step (d) of heating the test or object region with the heat source (L1) after a second time interval from the step (f) of distributing the layer;
- where present, initiating the step of preheating after a third time interval from initiating the step (f) of distributing the layer; and
wherein the first, the second and the third time interval are of the same respective duration for each layer, such that the duration of processing each layer is constant throughout the calibration process and the build process.

## Patentansprüche

1. Verfahren zur Ermittlung eines Sollwerts für einen primären Wärmesensor (72) in einer Vorrichtung zur schichtweisen Herstellung eines dreidimensionalen Objekts aus Partikelmaterial, wobei das Verfahren einen Kalibrierungsprozess umfasst, der Folgendes umfasst:
(a) Verteilen einer Schicht aus Partikelmaterial, wobei die Schicht eine Baubettoberfläche (12) bereitstellt;
(b) Messen eines ersten Temperaturwerts TD innerhalb einer Testregion (50) mit dem primären Wärmesensor (72) oder einem sekundären Wärmesensor (74), der oberhalb der Baubettoberfläche (12) angeordnet ist;
(c) Aufbringen einer Menge eines Absorptionsmodifikators auf eine Testregion (50) und / oder einen die Testregion (50) umgebenden Bereich;
(d) Erhitzen der Testregion (50) über einen Zeitraum;
(e) Messen eines zweiten Temperaturwerts TR innerhalb der Testregion (50) mit dem primären Wärmesensor (72);
(f) Verteilen einer weiteren Materialschicht über der vorhergehenden Materialschicht, wobei die neue Schicht die Baubettoberfläche (12) bildet;
- Wiederholen der Schritte (b) bis (f) des Schichtzyklus (100), so dass die Testregion (50) jeder weiteren Schicht einen höheren Temperaturwert TR als der der Testregion (50) der vorhergehenden Schicht erreicht, zumindest bis die Testregion (50) zu schmelzen beginnt;
- Ermitteln eines Sollwerts für den primären Wärmesensor (72) aus einer Charakteristik in der Entwicklung der gemessenen ersten und zweiten Temperaturwerte TD und TR der Testregion (50); und
- Anwendung des ermittelten Sollwerts auf nachfolgende Messungen des primären Wärmesensors (72).

2. Das Verfahren nach Anspruch 1, wobei der Schichtzyklus (100) ferner einen Schritt des Vorheizens jeder Schicht auf einen Vorheiztemperaturwert nach dem Schritt des Verteilens jeder Schicht und vor dem Schritt des Messens der Temperatur TD der Testregion (50) umfasst, wobei der Vorheiztemperaturwert niedriger ist als die Schmelztemperatur des Partikelmaterials.

3. Das Verfahren nach Anspruch 1 oder Anspruch 2, wobei der Schritt des Ermittelns eines Sollwerts für den primären Wärmesensor (72) das Identifizieren einer Charakteristik in der Entwicklung des gemessenen ersten Temperaturwerts TD der Testregion (50) einer der Schichten, und das Ermitteln eines Temperaturwerts, der als Sollwert für die Skala des primären Wärmesensors (72) zu verwenden ist, aus einer Messung eines zweiten Temperaturwerts TR der Testregion in der vorhergehenden Schicht zu der einen Schicht, umfasst.

4. Das Verfahren nach einem der vorhergehenden Ansprüche, wobei jede Schicht einen Satz von Teilschichten umfasst, wobei jede Teilschicht gemäß denselben Schritten des Verteilens, des Auftragens von Absorptionsmodifikator und des Erhitzens dieser Schicht und, falls vorhanden, des Vorheizens dieser Schicht verarbeitet wird, und wobei jeder gemessene erste und zweite Temperaturwert TD und TR jeder Schicht ein durchschnittlicher Temperaturwert ist, der auf den jeweiligen ersten und zweiten Temperaturwerten TD und TR basiert, die innerhalb der Testregion (50) einer oder mehrerer der Teilschichten dieser Schicht gemessen wurden.

5. Das Verfahren nach einem der vorhergehenden Ansprüche, wobei die Testregion (50) eine Vielzahl von Testbereichen (500) umfasst, die über der Baubettoberfläche (12) angeordnet sind; wobei der primäre Wärmesensor (72) eine Vielzahl von Sensorpixeln umfasst, so dass
- Schritt (b) das Messen des ersten Temperaturwerts TD innerhalb jedes Testbereichs (500) mit einem entsprechenden einen oder mehreren Pixeln der Vielzahl von primären Sensorpixeln umfasst; und/oder
- Schritt (e) das Messen des zweiten Temperaturwerts TR innerhalb jedes Testbereichs (500) mit dem oder einem entsprechenden einen oder mehreren Pixeln der Vielzahl von primären Sensorpixeln umfasst;
wobei der Sollwert für jedes der Vielzahl von Pixeln auf der Grundlage des ersten gemessenen Temperaturwertes TD und/oder des zweiten gemessenen Temperaturwertes TR für jeden Testbereich (500) jeder Schicht ermittelt wird; optional, wobei das Ermitteln des Sollwerts für den primären Wärmesensor (72) das Ermitteln eines durchschnittlichen Sollwerts für die Vielzahl von primären Sensorpixeln auf der Grundlage der gemessenen ersten und zweiten Temperaturwerte TD und TR für jeden Testbereich (500) jeder Schicht umfasst.

6. Das Verfahren nach Anspruch 5, wobei das Ermitteln des Sollwerts für den primären Wärmesensor (72) das Ermitteln eines durchschnittlichen Sollwerts für die Vielzahl von primären Sensorpixeln auf der Grundlage der gemessenen ersten und zweiten Temperaturwerte TD und TR für jeden Testbereich (500) jeder Schicht umfasst; und wobei für jedes der Vielzahl von Pixeln eine Korrektur auf der Grundlage des durchschnittlichen Sollwerts ermittelt wird.

7. Das Verfahren nach einem der vorhergehenden Ansprüche, wobei die Testregion (50) jeder weiteren Schicht einen höheren Temperaturwert TR erreicht als die Testregion (50) der vorhergehenden Schicht durch mindestens eine der folgenden Maßnahmen:
- Anlegen einer höheren Eingangsleistung an die Heizquelle (L1) während jedes Schritts (d) des Erhitzens im Vergleich zur vorhergehenden Schicht, wobei mindestens eine der höheren Eingangsleistungen ausreicht, um zu bewirken, dass das Partikelmaterial der Testregion (50) zu schmelzen beginnt; und
- Aufbringen eines Absorptionsmodifikators zumindest in Form eines Strahlungsabsorbers über die Testregion (50) in Schritt (c), wobei der Schritt des Aufbringens jeder weiteren Menge an Strahlungsabsorber im Vergleich zu der vorhergehenden Menge an Strahlungsabsorber eines oder mehreres des Folgenden umfasst:
- Aufbringen einer größeren Menge an Strahlungsabsorber pro Flächeneinheit über die Testregion (50); und
- Aufbringen eines anderen Strahlungsabsorbers, der eine höhere Energiemenge des von der Heizquelle (L1) gelieferten Strahlungsspektrums absorbieren kann als der vorhergehende Strahlungsabsorber;
wobei mindestens eine der weiteren Mengen ausreicht, um das Partikelmaterial der Testregion (50) zum Schmelzen zu bringen.

8. Das Verfahren nach Anspruch 7, wobei der Absorptionsmodifikator ein in einer Flüssigkeit enthaltener Strahlungsabsorber ist, und in Form von Tröpfchen aufgebracht wird, und wobei das Aufbringen jeder weiteren Menge an Strahlungsabsorber im Vergleich zu der vorhergehenden Menge an Strahlungsabsorber eines oder mehreres des Folgenden umfasst:
- Aufbringen einer höheren Anzahl von Tröpfchen pro Flächeneinheit auf der Testregion (50);
- Aufbringen von Tröpfchen mit einem größeren Volumen pro Flächeneinheit auf der Testregion (50);
- Aufbringen einer anderen Flüssigkeit durch einen jeweiligen weiteren Tröpfchenaufbringungskopf, wobei die andere Flüssigkeit Folgendes umfasst:
- einen anderen Strahlungsabsorber, der in der Lage ist, eine höhere Energiemenge des von der Heizquelle (L1) gelieferten Strahlungsspektrums zu absorbieren als der vorhergehende Strahlungsabsorber; und/oder
- eine höhere Konzentration von Gewicht pro Volumen des Strahlungsabsorbers im Vergleich zu derjenigen der vorhergehenden Flüssigkeit;
wobei mindestens eine der weiteren Mengen ausreicht, um das Partikelmaterial der Testregion (50) zum Schmelzen zu bringen.

9. Das Verfahren nach einem der vorhergehenden Ansprüche, wobei der Schritt (d) des Erhitzens jeder Schicht das Überführen einer Heizquelle (L1) über die Schicht umfasst, während die Heizquelle (L1) betrieben wird, wobei die Zeitspanne, in der die Testregion (50) erhitzt wird, durch die Geschwindigkeit der Heizquelle (L1) bestimmt wird.

10. Das Verfahren nach Anspruch 2 oder nach einem der Ansprüche 3 bis 9 in Abhängigkeit von Anspruch 2, wobei der Schritt des Vorheizens jeder verteilten Schicht das Überführen einer Vorheizquelle (L2) über die Schicht umfasst, während die Vorheizquelle (L2) betrieben wird, um die Testregion (50) auf die Vorheiztemperatur vorzuheizen.

11. Das Verfahren nach Anspruch 10, wobei die Schritte des Verteilens jeder Schicht, des Überführens der Vorheizquelle (L2) zum Vorheizen und des Überführens der Heizquelle (L1) zum Erhitzen über jede Schicht in der gleichen Richtung durchgeführt werden, wobei die Geschwindigkeit des Überführens der Vorheizquelle (L2) und des Überführens der Heizquelle (L1) über die Testregion (50) im Wesentlichen konstant ist.

12. Das Verfahren nach Anspruch 2 oder nach einem der Ansprüche 3 bis 11 sofern abhängig von Anspruch 2, wobei die Leistungszufuhr zur Heizquelle (L1) und eine Leistungszufuhr zur Vorheizquelle (L2) für jede Schicht im Wesentlichen gleich ist.

13. Das Verfahren nach einem der vorhergehenden Ansprüche umfasst ferner nach mindestens einem oder mehreren der Schichtzyklusschritte einen Schritt des Messens der Temperatur der Baubettoberfläche (12) unter Verwendung des primären Wärmesensors (72) und einen Schritt des Erwärmens jeder Schicht mit einer stationären Wärmequelle (20), die fest über der Baubettoberfläche positioniert ist, durch Betreiben der stationären Wärmequelle (20) auf der Grundlage der einen oder mehreren Temperaturmessungen der Baubettoberfläche (12) durch den primären Wärmesensor (72) und einer vordefinierten Zielschichttemperatur zwischen der Erstarrungstemperatur und der Schmelztemperatur des Partikelmaterials.

14. Das Verfahren nach Anspruch 13, wobei die stationäre Wärmequelle (20) während des gesamten Schichtzyklus (100) kontinuierlich betrieben wird.

15. Das Verfahren nach einem der vorhergehenden Ansprüche, wobei ein anschließender Objektbauprozess die gleichen Schichtzyklusschritte des Kalibrierungsprozesses umfasst, wobei für den Bauprozess: Schritt (c) des Bauprozesses das Aufbringen einer Menge an Absorptionsmodifikator über eine Objektregion und/oder einem der Objektregion umgebenden Bereich umfasst; und Schritt (d) das Erhitzen des Objektbereichs mit der Heizquelle (L1) über einen Zeitraum umfasst, so dass das Partikelmaterial innerhalb der Objektregion schmilzt;
wobei der Schichtzyklus (100) des Bauprozesses wiederholt wird, bis das Objekt vollständig ist, und wobei sowohl der Kalibrierungsprozess als auch der Bauprozess umfassen:
- Einleiten des Schritts des Verteilens jeder weiteren Schicht nach einem ersten Zeitintervall nach dem Einleiten des Schritts des Erhitzens der Test- oder Objektregion mit der Heizquelle (L1), und
- Einleiten des Schritts (d) des Erhitzens der Test- oder Objektregion mit der Heizquelle (L1) nach einem zweiten Zeitintervall ab dem Schritt (f) des Verteilens der Schicht;
- falls vorhanden, Einleiten des Schritts des Vorheizens nach einem dritten Zeitintervall ab dem Einleiten des Schritts (f) des Verteilens der Schicht; und
wobei das erste, das zweite und das dritte Zeitintervall für jede Schicht die gleiche Dauer haben, so dass die Dauer der Verarbeitung jeder Schicht während des Kalibrierungsprozesses und des Bauprozesses konstant ist.

## Revendications

1. Procédé permettant de déterminer un point de consigne pour un capteur thermique primaire (72) dans un appareil pour la fabrication couche par couche d'un objet tridimensionnel à partir d'un matériau particulaire ;
le procédé comprenant un processus d'étalonnage, comprenant :
(a) la distribution d'une couche de matériau particulaire, la couche fournissant une surface de lit de construction (12) ;
(b) la mesure d'une première valeur de température TD au sein d'une région de test (50) avec l'un d'un capteur thermique primaire (72) et d'un capteur thermique secondaire (74) positionnés au-dessus de la surface de lit de construction (12) ;
(c) le dépôt d'une quantité de modificateur d'absorption sur au moins l'une de la région de test (50) et d'une zone environnante entourant la région de test (50) ;
(d) le chauffage de la région de test (50) pendant un certain temps ;
(e) la mesure avec le capteur thermique primaire (72) d'une seconde valeur de température TR au sein de la région de test (50) ;
(f) la distribution d'une couche de matériau supplémentaire sur la couche de matériau précédente, la nouvelle couche fournissant la surface de lit de construction (12) ;
- la répétition des étapes (b) à (f) du cycle de couches (100), de telle sorte que la région de test (50) de chaque couche supplémentaire atteigne une valeur de température TR supérieure à celle de la région de test (50) de la couche précédente, au moins jusqu'à ce que la région de test (50) commence à fondre ;
- la détermination d'un point de consigne pour le capteur thermique primaire (72) à partir d'une caractéristique de l'évolution des première et seconde valeurs de température mesurées de TD et TR de la région de test (50) ; et
- l'application du point de consigne déterminé à des mesures subséquentes du capteur thermique primaire (72).

2. Procédé selon la revendication 1, dans lequel le cycle de couches (100) comprend en outre une étape de préchauffage de chaque couche à une valeur de température de préchauffage après l'étape de distribution de chaque couche et avant l'étape de mesure de la température TD de la région de test (50), dans lequel la valeur de température de préchauffage est inférieure à la température de fusion du matériau particulaire.

3. Procédé selon la revendication 1 ou la revendication 2, dans lequel l'étape de détermination d'un point de consigne pour le capteur thermique primaire (72) comprend l'identification d'une caractéristique dans l'évolution de la première valeur de température mesurée TD de la région de test (50) de l'une des couches et la détermination d'une valeur de température à utiliser comme point de consigne pour l'échelle du capteur thermique primaire (72) à partir d'une mesure d'une seconde valeur de température TR de la région de test dans la couche précédente de l'une couche.

4. Procédé selon l'une quelconque des revendications précédentes, dans lequel chaque couche comprend un ensemble de sous-couches, dans lequel chaque sous-couche est traitée selon les mêmes étapes de distribution, de dépôt d'un modificateur d'absorption et de chauffage de cette couche, et le cas échéant, de préchauffage de cette couche, et dans lequel chaque première et seconde valeurs de température TD et TR de chaque couche est une valeur de température moyenne basée sur les première et seconde valeurs de température respectives TD et TR mesurées dans la région de test (50) d'une ou plusieurs des sous-couches pour cette couche.

5. Procédé selon l'une quelconque des revendications précédentes, dans lequel la région de test (50) comprend une pluralité de zones de test (500) agencées sur la surface de lit de construction (12) ; dans lequel le capteur thermique principal (72) comprend une pluralité de pixels de capteur, de telle sorte qu'au moins l'une de
- l'étape (b) comprend la mesure de la première valeur de température TD dans chaque zone de test (500) avec un ou plusieurs pixels correspondants de la pluralité de pixels de capteur primaire ; et
- l'étape (e) comprend la mesure de la seconde valeur de température TR dans chaque zone de test (500) avec le ou un ou plusieurs pixels correspondants de la pluralité de pixels de capteur primaire ;
dans lequel le point de consigne est déterminé pour chacun de la pluralité de pixels sur la base d'au moins l'une des première et seconde valeurs de température mesurées TD et TR pour chaque zone de test (500) de chaque couche ;
facultativement, la détermination du point de consigne pour le capteur thermique primaire (72) comprend la détermination d'un point de consigne moyen pour la pluralité de pixels de capteur primaire sur la base des première et seconde valeurs de température mesurées TD et TR pour chaque zone de test (500) de chaque couche.

6. Procédé selon la revendication 5, dans lequel la détermination du point de consigne pour le capteur thermique primaire (72) comprend la détermination d'un point de consigne moyen pour la pluralité de pixels de capteur primaire sur la base des première et seconde valeurs de température mesurées TD et TR pour chaque zone de test (500) de chaque couche ; et dans lequel pour chacun de la pluralité de pixels, une correction est déterminée sur la base du point de consigne moyen.

7. Procédé selon l'une quelconque des revendications précédentes, dans lequel la région de test (50) de chaque couche supplémentaire atteint une valeur de température TR supérieure à celle de la région de test (50) de la couche précédente par au moins l'un de :
- l'application d'une quantité plus élevée de puissance d'entrée à la source de chaleur (L1) pendant chaque étape (d) de chauffage par rapport à la couche précédente, dans lequel au moins l'une des quantités de puissance d'entrée plus élevées est suffisante pour faire commencer à fondre le matériau particulaire de la région de test (50) ; et
- le dépôt à l'étape (c) d'un modificateur d'absorption au moins sous la forme d'un absorbeur de rayonnement, sur la région de test (50), dans lequel l'étape de dépôt de chaque quantité supplémentaire d'absorbeur de rayonnement comprend, par rapport à la quantité précédente d'absorbeur de rayonnement, l'un ou plusieurs parmi :
- le dépôt d'une plus grande quantité d'absorbeur de rayonnement par unité de surface sur la région de test (50) ; et
- le dépôt d'un absorbeur de rayonnement différent capable d'absorber une plus grande quantité d'énergie du spectre de rayonnement fourni par la source de chaleur (L1) que l'absorbeur de rayonnement précédent ;
dans lequel au moins l'une des quantités supplémentaires est suffisante pour faire commencer à fondre le matériau particulaire de la région de test (50).

8. Procédé selon la revendication 7, dans lequel le modificateur d'absorption est un absorbeur de rayonnement compris dans un fluide et déposé sous forme de gouttelettes, et dans lequel le dépôt de chaque quantité supplémentaire d'absorbeur de rayonnement comprend, par rapport à la quantité précédente d'absorbeur de rayonnement, l'un ou plusieurs parmi :
- le dépôt d'un nombre plus élevé de gouttelettes par unité de surface sur la région de test (50) ;
- le dépôt de gouttelettes d'un plus grand volume par unité de surface sur la région de test (50) ;
- le dépôt, par une autre tête de dépôt de gouttelettes respective, d'un fluide différent, dans lequel le fluide différent comprend l'un ou les deux parmi :
- un absorbeur de rayonnement différent capable d'absorber une plus grande quantité d'énergie du spectre de rayonnement fourni par la source de chaleur (L1) que l'absorbeur de rayonnement précédent ; et
- une concentration en poids par volume de l'absorbeur de rayonnement plus élevée par rapport à celle du fluide précédent ;
dans lequel au moins l'une des quantités supplémentaires est suffisante pour faire commencer à fondre le matériau particulaire de la région de test (50).

9. Procédé selon l'une quelconque des revendications précédentes, dans lequel l'étape (d) de chauffage de chaque couche comprend le passage d'une source de chaleur (L1) à travers la couche tout en faisant fonctionner la source de chaleur (L1), dans lequel la durée pendant laquelle la région de test (50) est chauffée est déterminée par la vitesse de la source de chaleur (L1).

10. Procédé selon la revendication 2 ou l'une quelconque des revendications 3 à 9 lorsqu'elle dépend de la revendication 2, dans lequel l'étape de préchauffage de chaque couche distribuée comprend le passage d'une source de préchauffage (L2) à travers la couche tout en faisant fonctionner la source de préchauffage (L2) pour préchauffer la région de test (50) à la température de préchauffage.

11. Procédé selon la revendication 10, dans lequel les étapes de distribution de chaque couche, de passage de la source de préchauffage (L2) pour préchauffer et de passage de la source de chaleur (L1) pour chauffer à travers chaque couche sont effectuées dans la même direction, facultativement dans lequel la vitesse de passage de la source de préchauffage (L2) et le passage de la source de chaleur (L1) sur la région de test (50) sont sensiblement constants.

12. Procédé selon la revendication 2, ou selon l'une quelconque des revendications 3 à 11 lorsqu'elle dépend de la revendication 2, dans lequel la puissance appliquée à la source de chaleur (L1) et une puissance appliquée à la source de préchauffage (L2) sont sensiblement identiques pour chaque couche.

13. Procédé selon l'une quelconque des revendications précédentes, comprenant en outre, après au moins une ou plusieurs des étapes du cycle de couches, une étape de mesure de la température de la surface de lit de construction (12) à l'aide du capteur thermique primaire (72), et une étape de chauffage de chaque couche avec une source de chaleur stationnaire (20) positionnée de manière fixe au-dessus de la surface de lit de construction, en faisant fonctionner la source de chaleur stationnaire (20) sur la base d'une ou plusieurs mesures de température de la surface de lit de construction (12) par le capteur thermique primaire (72) et d'une température de couche cible prédéfinie comprise entre la température de solidification et la température de fusion du matériau particulaire.

14. Procédé selon la revendication 13, dans lequel la source de chaleur stationnaire (20) fonctionne en continu tout au long du cycle de couches (100).

15. Procédé selon l'une quelconque des revendications précédentes, dans lequel un processus de construction d'objet subséquent comprend les mêmes étapes de cycle de couches que le processus d'étalonnage, dans lequel pour le processus de construction : l'étape (c) du processus de construction comprend le dépôt d'une quantité de modificateur d'absorption sur au moins l'une d'une région d'objet et d'une zone environnante entourant la région d'objet ; et l'étape (d) comprend le chauffage de la région d'objet avec la source de chaleur (L1) pendant une durée telle que le matériau particulaire au sein de la région d'objet fond ;
dans lequel le cycle de couches (100) du processus de construction est répété jusqu'à ce que l'objet soit terminé, et dans lequel le processus d'étalonnage et le processus de construction comprennent :
- l'initiation de l'étape de distribution de chaque couche supplémentaire après un premier intervalle de temps à compter de l'initiation de l'étape de chauffage de la région de test ou d'objet avec la source de chaleur (L1), et
- l'initiation de l'étape (d) de chauffage de la région de test ou d'objet avec la source de chaleur (L1) après un deuxième intervalle de temps à compter de l'étape (f) de distribution de la couche ;
- le cas échéant, l'initiation de l'étape de préchauffage après un troisième intervalle de temps à compter de l'initiation de l'étape (f) de distribution de la couche ; et
dans lequel les premier, deuxième et troisième intervalles de temps ont la même durée respective pour chaque couche, de telle sorte que la durée de traitement de chaque couche est constante tout au long du processus d'étalonnage et du processus de construction.
